# FASCICULE DE BREVET EUROPEEN

(11) **EP 4 502 696 B1**
(45) Date de publication et mention de la délivrance du brevet: **26.08.2026**
(21) Numéro de dépôt: 24191905.9
(22) Date de dépôt: 30.07.2024
(51) Int. Cl.: G02B 17/06, G02B 17/08, G03F 7/20

(54) **TÉLESCOPE ANASTIGMATE À QUATRE MIROIRS AMÉLIORÉ**
VERBESSERTES VIERSPIEGEL-ANASTIGMATTELESKOP
IMPROVED FOUR MIRROR ANASTIGMAT TELESCOPE

(30) Priorité: 03.08.2023 FR 2308414
(43) Date de publication de la demande: 05.02.2025
(73) Titulaire: THALES, 92190 Meudon (FR)
(72) Inventeur: AYMARD, Benjamin, 06150 Cannes (FR); DROGOUL, Audric, 06150 Cannes (FR); TETAZ, Nicolas, 06150 Cannes (FR)
(74) Mandataire: Atout PI Laplace

(56) Documents cités:
- US-A- 5 550 672
- US-A1- 2014 253 999
- US-A1- 2018 335 616
- US-B2- 8 011 793
- ALVARADO-MARTÍNEZ JORGE D J ET AL: "Optical design of an off-axis four-mirror objective system (OFOS) for a thermal camera", PROCEEDINGS OF THE SPIE, SPIE, US, vol. 12078, 19 November 2021 (2021-11-19), pages 120781Q - 120781Q, XP060150762, ISSN: 0277-786X, ISBN: 978-1-5106-5738-0, DOI: 10.1117/12.2603677
- HOWARD J M ET AL: "Imaging with four spherical mirrors", APPLIED OPTICS, OPTICAL SOCIETY OF AMERICA, WASHINGTON, DC, US, vol. 39, no. 19, 1 July 2000 (2000-07-01), pages 3232 - 3242, XP002485643, ISSN: 0003-6935, DOI: 10.1364/AO.39.003232

## Description

### DOMAINE DE L'INVENTION

La présente invention concerne le domaine des télescopes et plus particulièrement celui des télescopes anastigmates à 4 miroirs. La présente invention permet la détermination des paramètres des différents miroirs à partir des spécifications de l'instrument intégrant une position de la pupille de sortie.

### ETAT DE LA TECHNIQUE

Un type de télescope à haute résolution fonctionnant connu est le télescope dénommé TMA (acronyme de l'expression anglo-saxonne « Three Mirors Anastigmate ») qui est un télescope anastigmat à trois miroirs asphériques. Ce type de télescope se calcule à partir des équations de Korsch bien connues de l'homme de l'art. Une solution particulière de ces équations, bien connue de l'homme de l'art, est un télescope couramment dénommé Korsch. Ce télescope présente trois miroirs de type Concave (M1) - Convexe (M2)- Concave (M3). Chaque miroir est caractérisé par au moins deux paramètres, un rayon de courbure R (ou une vergence V égale à 2/R) et une conicité k. Le système optique présente une pupille d'entrée, un axe optique défini par le rayon passant par le centre de la pupille d'entrée et perpendiculaire à cette pupille, la pupille d'entrée étant généralement disposée au niveau du premier miroir, et une pupille de sortie. Ces notions sont bien connues de l'homme de l'art. Dans le télescope Korsch les trois miroirs sont agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé un détecteur. Par application des équations de Korsch on calcule aisément les paramètres respectifs des trois miroirs. La solution théorique est de très bonne qualité, ce qui fait tout l'intérêt de ce type de télescope.

La solution théorique est calculée sur l'axe, c'est-à-dire que le rayon central/moyen du champ de vue est confondu avec l'axe optique et ne tient pas compte de l'encombrement physique des miroirs. Pour que la lumière puisse passer dans la combinaison, trois méthodes classiques peuvent être combinées: l'ajout d'inclinaison (« tilt ») des miroirs, l'ajout d'un off-axis de pupille/champs et l'utilisation de miroirs de renvoi.

On connait également le télescope (ou imageur imageant un objet à l'infini, dénommé par la suite simplement imageur) de type Korsch à 4 miroirs ou 4MA, dont la combinaison optique se calcule à partir des équations de Korch généralisées à n miroirs avec n=4. Du fait du miroir supplémentaire on récupère un degré de liberté pour le design du système.

Dans son livre « Reflective Optics » (Academic Press 1987) D. Korsch présente un formalisme mathématique permettant dans des systèmes multi-miroirs d'exprimer les principales aberrations optiques, dites de Seidel (Aberration sphérique, coma, astigmatisme, courbure de champ, distorsion) en fonction de paramètres simples tels que la distance entre les miroirs, la distance des objets et des images et le ratio des hauteurs des rayons. Ce formalisme simple et efficace permet de trouver des systèmes multi-miroirs aplanétique et anastigmate et respectant la contrainte de Petzval, en résolvant quelques équations.

On dénomme:
- M10, M20, M30 et M40 les quatre miroirs de l'imageur Korsch,
- e1, e2, e3 les distances entre respectivement le premier et le deuxième, le deuxième et le troisième, le troisième et le quatrième miroir,
- e4 la distance entre le quatrième miroir et le plan focal PF0,
- F0 la distance focale.

Les équations de Korsch reposent sur une approche perturbative: résolution d'une approximation à l'ordre un, qui donne les courbures, puis à l'ordre 3, qui donne les constantes de conicité (l'ordre 2 est résolu de par la symétrie de révolution du système). La résolution des courbures amène à des systèmes non-linéaires, qui ont plusieurs solutions (les « branches » voir plus loin).

Le design optique d'un imageur 4MA basé sur les équations de Korsch généralisées s'effectue donc en plusieurs étapes :

Dans une première étape on détermine avec les équations de Korsch d'ordre 1, et à partir du jeu de distances (e1, e2, e3, e4), de la focale F0 et de la courbure R1 du miroir M1, les rayons de courbures (R2, R3, R4). En fait les équations de Korsch utilisent comme variables les grandissements, desquels on déduit les courbures. Le système présente un degré de liberté et donc on choisit la valeur d'un rayon de courbure, par exemple R1.

Dans une deuxième étape, en se basant sur les équations de Korsch d'ordre 3 on « asphérise » les miroirs en calculant les conicités k1, k2, k3 et k4 de manière à compenser les quatres aberrations de Seidel (aberration sphérique W040, coma W131, astigmatisme W222, distorsion W311). Du fait de l'existence de « branches » il faut calculer un jeu de corrections asphériques par jeu d'équation.

Les équations de Korsch permettent seulement de trouver une solution « sur l'axe ». Il faut alors supprimer l'obscuration, et compenser les aberrations introduites par cette étape.

Ainsi dans une troisième étape on applique les méthodes précitées pour que la lumière puisse passer dans le système (« tilt » et/ou « of axis » et/ou miroir(s) de renvoi). Cette troisième étape induit de nouvelles aberrations dans le système.

Dans une quatrième étape optionnelle on minimise ces aberrations additionnelles en permettant à au moins un des miroirs d'avoir une surface dite « free form » (approche en utilisant les polynômes de Zernike). L'optimisation est réalisée de manière classique à l'aide de logiciels de calcul optique (CodeV, Zemax, Oslo,...). Ces logiciels fonctionnent sur le principe de la minimisation d'une fonction d'erreur. Typiquement la fonction d'erreur inclut la qualité image au plan focal selon un critère prédéterminé. Le critère prédéterminé consiste par exemple à minimiser d'une erreur de forme d'onde ou WFE pour « Wave Front Error » en anglais, moyennée sur une pluralité de points du champ, bien connu de l'homme de l'art. Typiquement on cherche à minimiser la valeur quadratique moyenne ou WFE RMS.

On distingue deux types de système optique ou imageur 4MA caractérisés par la position de la pupille de sortie. On dénomme Pe la pupille d'entrée et pe la distance entre la pupille d'entrée PE et M10, et Ps la pupille de sortie avec ps la distance entre le quatrième miroir et la pupille sortie PS.

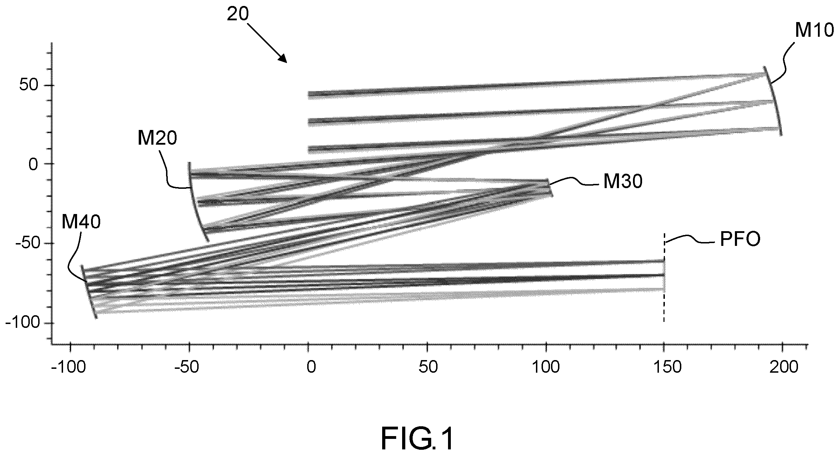

Un imageur dit télécentrique, dit 4MATC présente une pupille de sortie Ps à l'infini (*pₛ* = ∞). Un tel imageur 20 calculé avec les équations de Korsch généralisées est illustré figure 1. L'imageur 4MATC est par exemple utilisé en combinaison avec un spectromètre pour former un spectro-imageur. La contrainte de télécentricité assure une arrivée parallèle des rayons en fin d'imageur, permettant le passage à travers une fente, source du spectromètre.

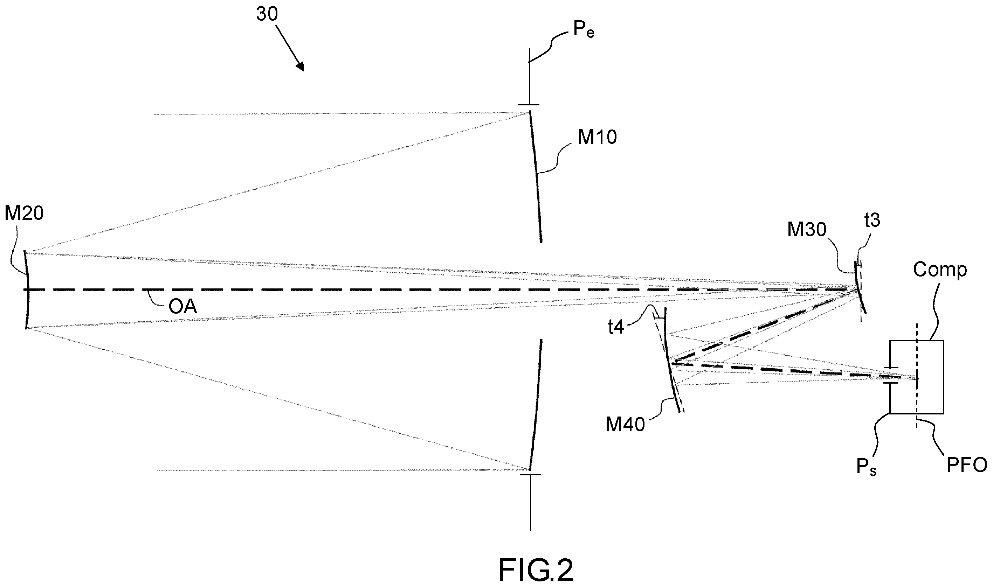

Le deuxième type d'imageur, dit 4MAPSF, présente une pupille de sortie Ps à distance finie (*pₛ* < ∞). Un tel imageur 30 calculé avec les équations de Korsch généralisées est illustré figure 2. L'imageur 4MAPSF est utilisé par exemple pour les imageurs fonctionnant dans le domaine de l'infrarouge où le plan focal (dans lequel est positionné le détecteur) doit être refroidi. Pour cela il est placé dans un compartiment Comp afin de l'isoler et/ou le refroidir activement : le hublot de ce dernier laisse passer le flux lumineux et matérialise alors la pupille de sortie du système. Les miroirs M30 et M40 sont inclinés d'angles respectivement t3 et t4 pour que la lumière puisse se propager.

A ce jour, les équations de Korsch généralisées permettent de calculer un jeu de quatre courbures de miroirs sur l'axe optique, avec les paramètres de départ prédéterminés suivants : un jeu de distances (e1, e2, e3, e4), une focale F0, la contrainte de Petzval et le rayon de courbure R1 du premier miroir M1. Ce calcul ne prend pas en compte la contrainte de pupille de sortie. En d'autre terme la position de la pupille de sortie n'est pas un paramètre d'entrée du système.

La pupille de sortie est l'image de la pupille d'entrée par le système, et de fait se calcule directement à partir des courbures, des distances inter miroirs, et de la distance entre pupille d'entrée et le premier miroir du système (notée pe).

Dans le cadre des équations de Korsch pour les 4MA, selon l'état de l'art lorsque les opticiens veulent placer une pupille de sortie PS à une position donnée, ils commencent par calculer un système, puis positionnent la pupille d'entrée PE de façon à ce que le système envoie PE à la position choisie pour PS.

Pour un système à 4 miroirs, le système n'est pas complètement fermé : un degré de liberté interne existe, créant un continuum de solutions indexées par ce paramètre.

Selon un exemple on choisit un paramètre, par exemple R1, rayon de courbure du premier miroir, comme paramètre indexant le continuum des solutions des équations de Korsch. On fait varier la valeur de R1 et on regarde la position de la pupille de sortie obtenue, en cherchant la valeur souhaitée. La contrainte de distance entre la pupille de sortie et le plan focal n'est pas une solution directe des équations de Korsch.

La mise en œuvre numérique de ces méthodes empiriques se heurte au caractère non convexe du problème (il peut exister des minima locaux) et non défini partout (existence de discontinuités). La résolution numérique est difficile car sensible à l'initialisation, coûteuse en temps de calcul, et sans aucune certitude de convergence. De plus il est nécessaire d'avoir une grande précision dans l'estimation du paramètre R1 car le système y est très sensible : une faible erreur d'estimation du paramètre d'entrée conduit à une grande erreur de position de pupille de sortie.

Ainsi ces méthodes présentent trois points faibles : la précision, le coût de calcul et la non garantie de trouver une solution. Elles ne constituent donc pas une optimisation numérique fiable mais sont de type essai/erreur, ou « brute force » en anglais.

La publication de Papa et al « Survey of four-mirror freeform imager solution space », Optics Express, vol 29 (décembre 2021) illustre le design d'un système de type 4MA et le degré de liberté associé. Dans le paragraphe 3.1 de cette publication les auteurs présentent une formule pour créer un télescope de type 4MA à l'ordre 1, ce qui correspond aux valeurs de vergences des miroirs, étant donnée une « puissance » du premier miroir, une focale cible, des distances inter miroir, et une distance au plan focal. Cette puissance du premier miroir est le degré de liberté qui est ici fixé par la valeur de V1 pour calculer la combinaison du télescope.

Ainsi la première étape du design optique d'un télescope 4MA à partir des équations de Korsch, visant à déterminer les rayons de courbure sur l'axe des quatre miroirs, à partir des distances e1 à e4 et d'une focale prédéterminées, ne permet pas une optimisation numérique correcte avec la contrainte additionnelle de valeurs prédéterminées de distance de la pupille d'entrée pe et de sortie ps.

Un but de la présente invention est de remédier aux inconvénients précités en proposant un télescope à quatre miroirs dont les miroirs présentent des courbures sur l'axe qui vérifient des relations ayant été établies de manière originale, en tenant compte de la double contrainte de pupilles d'entrée et de sortie fixées, ce qui n'existe pas dans l'état de l'art.

### DESCRIPTION DE L'INVENTION

La présente invention a pour objet un télescope anastigmate comprenant quatre miroirs consécutifs, respectivement dénommés premier miroir M₁, deuxième miroir M₂, troisième miroir M₃ et quatrième miroir M₄, formant un ensemble optique dit 4MA, ledit télescope présentant un axe optique, une pupille d'entrée disposée à une distance pe du premier miroir et une pupille de sortie, image de la pupille d'entrée par ledit télescope, et disposée à une distance ps du quatrième miroir, une longueur focale et un plan focal global,
lesdits quatre miroirs consécutifs M₁, M₂, M₃ et M₄ présentant respectivement des vergences V₁, V₂, V₃ et V₄ présentant des valeurs égales à un premier quadruplet ( ${V}_{1}^{+} , {V}_{2}^{+} , {V}_{3}^{+} , {V}_{4}^{+}$) ou à un deuxième quadruplet ( ${V}_{1}^{-} , {V}_{2}^{-} , {V}_{3}^{-} , {V}_{4}^{-}$) déterminées à partir des formules ci-dessous :
${V}_{2}^{\pm } = \frac{- β \pm \sqrt{{β}^{2} - 4 αδ}}{2 α}$
${V}_{3}^{\pm } = \frac{{α}_{0} + {α}_{1} {V}_{2}^{\pm }}{{β}_{0} + {β}_{1} {V}_{2}^{\pm }}$
${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$
${V}_{4}^{\pm } = - \left({V}_{1}^{\pm }+{V}_{2}^{\pm }+{V}_{3}^{\pm }\right)$

Avec : $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} . c}{a}}\right) & pour {p}_{s} < ∞ \\ b = - \left(\frac{1}{c}+{ap}_{e}\right) & pour ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{T}_{0}}{{V}_{2}^{0}} .$
pe : distance entre la pupille d'entrée Pe et M₁
ps : distance entre la pupille de sortie Ps et M₄
F : focale du télescope
ei, i =1..3 : distance entre le miroir Mi et le miroir Mi+1
e4 : distance entre le plan focal du télescope et le miroir M₄
les distances e1 à e4 et ps étant positives.

Selon un mode de réalisation les conicités des quatre miroirs consécutifs sont déterminées à partir des équations de Korsch.

Selon un mode de réalisation les quatre miroirs sont agencés en trois dimensions de manière à ce que la lumière se propageant dans ledit télescope ne soit pas obstruée.

Selon une variante le télescope selon l'invention est configuré de sorte qu'il soit télécentrique, c'est à dire qu'il présente une pupille de sortie à l'infini.

L'invention concerne également un système spectro-imageur comprenant un télescope télécentrique selon l'invention et comprenant en outre un spectromètre comprenant une fente d'entrée disposée dans le plan focal du télescope.

Selon une autre variante le télescope selon l'invention présente une pupille de sortie à une distance finie. Selon un mode de réalisation le télescope comprend un compartiment fermé présentant un hublot dont la position est confondue avec celle de la pupille de sortie, et comprend en outre un détecteur refroidi positionné dans le compartiment.

Selon un autre aspect l'invention concerne un système imageur comprenant une pupille d'entrée globale et une pupille de sortie globale et comprenant :
- un télescope anastigmate selon l'invention,
- un ensemble optique amont disposé en amont de l'ensemble optique 4MA,
- un ensemble optique aval disposé en aval de l'ensemble optique 4MA,
- l'ensemble optique amont étant configuré pour imager la pupille d'entrée globale sur la pupille d'entrée de l'ensemble optique 4MA et l'ensemble optique aval étant configuré pour imager la pupille de sortie de l'ensemble optique 4MA sur la pupille de sortie globale du système imageur.

Selon un autre aspect l'invention concerne également un procédé de détermination des vergences V₁, V₂, V₃ et V₄ respectivement de quatre miroirs consécutifs dénommés premier miroir M1, deuxième miroir M2, troisième miroir M3 et quatrième miroir M4 d'un télescope anastigmate et formant un ensemble optique dit 4MA, le télescope présentant un axe optique, une pupille d'entrée disposée à une distance **pe** du premier miroir et une pupille de sortie, image de la pupille d'entrée par le télescope, et disposée à une distance **ps** du quatrième miroir, une longueur focale et un plan focal global, les vergences étant déterminées sur l'axe optique et égales à un premier quadruplet ( ${V}_{1}^{+} , {V}_{2}^{+} , {V}_{3}^{+} , {V}_{4}^{+}$) ou à un deuxième quadruplet ( ${V}_{1}^{-} , {V}_{2}^{-} , {V}_{3}^{-} , {V}_{4}^{-}$) déterminés selon les formules :
${V}_{2}^{\pm } = \frac{- β \pm \sqrt{{β}^{2} - 4 αδ}}{2 α}$
${V}_{3}^{\pm } = \frac{{α}_{0} + {α}_{1} {V}_{2}^{\pm }}{{β}_{0} + {β}_{1} {V}_{2}^{\pm }}$
${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$
${V}_{4}^{\pm } = - \left({V}_{1}^{\pm }+{V}_{2}^{\pm }+{V}_{3}^{\pm }\right)$

Avec : $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s ⋅} c}{a}}\right) pour {p}_{s} < ∞ \\ b = - \left(\frac{1}{c}+{ap}_{e}\right) pour ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe : distance entre la pupille d'entrée Pe et M₁
ps : distance entre la pupille de sortie Ps et M₄
F : focale du télescope
ei, i =1..3 : distance entre le miroir Mi et le miroir Mi+1
e4 : distance entre le plan focal du télescope et le miroir M₄
les distances e1 à e4 et ps étant positives.

Selon un autre aspect l'invention concerne un procédé de conception d'un télescope anastigmate comprenant :
- une étape de détermination desdites vergences selon le procédé selon l'inveniton,
- une étape de détermination des conicités desdits quatre miroirs à partir des équations de Korsch,
- une étape de détermination des positions et inclinaisons respectives desdits miroirs en trois dimensions de manière à supprimer une obstruction de la lumière se propageant dans ledit télescope, en ajoutant à la combinaison optique formée par lesdits quatre miroirs sur l'axe, au moins une inclinaison d'un miroir, et/ou au moins un off-axis de pupille et/ou de champ, et/ou au moins un miroir de renvoi.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 déjà citée illustre un exemple d'imageur télécentrique présentant une pupille de sortie à l'infini selon l'état de l'art.
La figure 2 déjà citée illustre un exemple d'imageur présentant une pupille de sortie à distance finie et un détecteur refroidi placé dans un compartiment.
La figure 3 illustre un exemple de télescope télécentrique selon l'invention dans une configuration « sur l'axe ».
La figure 4 illustre l'exemple d'un télescope télécentrique selon l'invention dans une configuration dé-obscurée, calculée à partir de la configuration sur l'axe de la figure 3 et de manière à ce que la lumière puisse se propager dans le système.
La figure 5 illustre un exemple de télescope à pupille de sortie à distance finie selon l'invention dans une configuration « sur l'axe ».
La figure 6 illustre l'exemple d'un télescope à pupille de sortie à distance finie selon l'invention dans une configuration dé-obscurée, calculée à partir de la configuration sur l'axe de la figure 5 et de manière à ce que la lumière puisse se propager dans le système.
La figure 7 illustre un système imageur selon l'invention comprenant un ensemble optique 4MA selon l'invention, un ensemble optique amont disposé en amont de l'ensemble optique 4MA et un ensemble optique aval disposé en aval de l'ensemble optique 4MA.

### DESCRIPTION DETAILLEE DE L'INVENTION

L'invention concerne un télescope à quatre miroirs consécutifs (M1, M2 ,M3, M4), dont on détermine les quatre vergences (V1,V2,V3,V4) afin d'obtenir une pupille d'entrée et une pupille de sortie à des positions prédéterminées, ce qui n'existe pas dans l'état de la technique.

Le télescope 10 4MA selon l'invention présente un quadruplet de vergence (V1,V2,V3,V4) déterminé de manière analytique à partir des données d'entrée qui sont :
- e1, e2, e3 les distances entre respectivement le premier et le deuxième, le deuxième et le troisième, le troisième et le quatrième miroir,
- e4 la distance entre le quatrième miroir et le plan focal PF du télescope,
- F la distance focale.
- pe distance entre la pupille d'entée Pe et le miroir M₁,
- ps distance entre le miroir M₄ et la pupille de sortie Ps.

On impose également le respect de la condition de Petzval.

Ainsi on se donne une position de pupille d'entrée et on détermine les vergences (c'est à dire les courbures : Ri = 2/Vi) pour avoir la pupille de sortie à l'endroit souhaité. Les vergences sont définies par rapport à l'axe optique courant, convention qui impose le signe : en suivant le sens de parcours des rayons, qui s'inverse à chaque réflexion, un rayon de courbure R positif indique que le centre de courbure du miroir est positionné à distance R avant le centre du miroir (le miroir se « referme » autour des rayons incidents).

L'invention utilise le degré de liberté du système pour imposer une pupille d'entrée et envoyer la pupille de sortie ou l'on souhaite, en calculant les bonnes courbures.

La démarche pour la détermination des formules analytiques est la suivante.

Selon un premier aspect on considère un système optique à 4 miroirs, entièrement décrit à l'ordre 1 par sa matrice de transfert : $M = \left(\begin{matrix}a & b \\ c & d\end{matrix}\right)$

Par construction on a nécessairement (voir livre « Optique » de J.-P. Perez, chapitres « Systèmes centrés » et « Pupilles et diaphragmes) :
$a = \frac{{e}_{4}}{F}$
$c = \frac{- 1}{F}$

Rappelons que par ailleurs, par construction, la matrice de transfert M est de déterminant 1, ce qui fixe la valeur du coefficient *d* en fonction des trois autres :
$ad - bc = 1 ⇔ d = \frac{1 + bc}{a}$

L'équation d'ordre 1 donnant la position de la pupille de sortie, image de la pupille d'entrée par le système de matrice M, est donnée par :
$\left\{\begin{matrix}b = - \left(\frac{{ap}_{e} + \frac{{p}_{s}}{a} + {cp}_{e} {p}_{s}}{1 + \frac{{p}_{s} . c}{a}}\right) & pour {p}_{s} < ∞ \\ b = - \left(\frac{1}{c}+{ap}_{e}\right) & pour ps = ∞\end{matrix}\right.$
ps<∞ : pupille de sortie à une distance finie
ps=∞ : pupille de sortie à l'infini

On exprime ainsi b comme une fonction de a, c, pe et ps.

Selon un deuxième aspect, étant données les vergences des miroirs (V₁, V₂, V₃, V₄) et (e1, e2, e3) les distances entre les miroirs, la matrice de transfert du système s'exprime : $\begin{matrix}M = \left(\begin{matrix}1 & 0 \\ - {V}_{4} & 1\end{matrix}\right) \left(\begin{matrix}1 & {e}_{3} \\ 0 & 1\end{matrix}\right) \left(\begin{matrix}1 & 0 \\ - {V}_{3} & 1\end{matrix}\right) \left(\begin{matrix}1 & {e}_{2} \\ 0 & 1\end{matrix}\right) \left(\begin{matrix}1 & 0 \\ - {V}_{2} & 1\end{matrix}\right) \left(\begin{matrix}1 & 0 \\ - {V}_{1} & 1\end{matrix}\right) \\ = \left(\begin{matrix}a & b \\ c & d\end{matrix}\right)\end{matrix}$

Avec (formules (5)) $\begin{matrix}a = 1 - {e}_{1} {V}_{1} - {V}_{1} {e}_{2} - {V}_{2} {e}_{2} + {e}_{1} {e}_{2} {V}_{1} {V}_{2} \\ + {e}_{3} \left(-{V}_{1}-{V}_{2}-{V}_{3}+{e}_{1}\left({V}_{1}{V}_{3}+{V}_{1}{V}_{2}\right)+{e}_{2}\left({V}_{1}{V}_{3}+{V}_{2}{V}_{3}\right)-{e}_{1}{e}_{2}{V}_{1}{V}_{2}{V}_{3}\right) ,\end{matrix}$ $b = {e}_{1} + {e}_{2} - {e}_{1} {e}_{2} {V}_{2} + {e}_{3} \left(1-{e}_{1}{V}_{2}-{e}_{1}{V}_{3}-{e}_{2}{V}_{3}+{e}_{1}{e}_{2}{V}_{2}{V}_{3}\right) ,$ $\begin{matrix}c = - {V}_{4} \left(1-{e}_{1}{V}_{1}-{V}_{1}{e}_{2}-{V}_{2}{e}_{2}+{e}_{1}{e}_{2}{V}_{1}{V}_{2}\right) \\ + \left(-{V}_{1}-{V}_{2}-{V}_{3}+{e}_{1}\left({V}_{1}{V}_{3}+{V}_{1}{V}_{2}\right)+{e}_{2}\left({V}_{1}{V}_{3}+{V}_{2}{V}_{3}\right)-{e}_{1}{e}_{2}{V}_{1}{V}_{2}{V}_{3}\right) \left(1-{V}_{4}{e}_{3}\right) ,\end{matrix}$ $d = \frac{1 + bc}{a} .$

Partant de valeurs connues de e1à e4, F, pe et ps, dénommés paramètres d'entrée, les formules (1) à (4) permettent de déterminer les coefficients (a, b, c, d) en fonction de ces paramètres d'entrée. Considérons également que le système respecte la condition de Petzval (annulation de la courbure de champ au plan image) :
${V}_{1} + {V}_{2} + {V}_{3} + {V}_{4} = 0$

La résolution du système constitué des formules (5), en remplaçant les coefficients (a, b, c d) par les valeurs en fonction des paramètres d'entrée, et de l'équation (6), permet d'expliciter les vergences à partir des paramètres d'entrée.

La résolution du système donne le résultat ci-dessous :

On introduit quelques notations : ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$

La vergence V₂ est donnée par la résolution d'une équation d'ordre 2, donnant possiblement deux solutions réelles :
${V}_{2}^{\pm } = \frac{- β \pm \sqrt{{β}^{2} - 4 αδ}}{2 α}$

Connaissant V₂, on peut remonter à V₃ en utilisant l'équation sur b des formules (5) :
${V}_{3}^{\pm } = \frac{{α}_{0} + {α}_{1} {V}_{2}^{\pm }}{{β}_{0} + {β}_{1} {V}_{2}^{\pm }}$

Connaissant V₂ et V₃, l'équation sur a des formules (5) donne V₁ :
${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$

Enfin, l'équation de Petzval permet d'expliciter la dernière vergence V₄ :
${V}_{4}^{\pm } = - \left({V}_{1}^{\pm }+{V}_{2}^{\pm }+{V}_{3}^{\pm }\right)$

Lorsque qu'il existe deux solutions réelles pour V₂, dénommées ${V}_{2}^{+}$ et ${V}_{2}^{-}$ , on obtient donc deux quadruplets ( ${V}_{1}^{+} , {V}_{2}^{+} , {V}_{3}^{+} , {V}_{4}^{+}$) et ( ${V}_{1}^{-} , {V}_{2}^{-} , {V}_{3}^{-} , {V}_{4}^{-}$). Ainsi les **vergences** du télescope 10 selon l'invention présentes des valeurs égales à un premier quadruplet ( ${V}_{1}^{+} , {V}_{2}^{+} , {V}_{3}^{+} , {V}_{4}^{+}$) ou à un deuxième quadruplet ( ${V}_{1}^{-} , {V}_{2}^{-} , {V}_{3}^{-} , {V}_{4}^{-}$) déterminées à partir des formules ci-dessus.

Dans ce formalisme, les distances e1 à e3 sont considérées avec le système déplié, c'est-à-dire qu'elles sont toujours positives. De même e4 et ps sont toujours positives. La pupille de sortie est toujours disposée après le miroir M₄. La distance pe peut être négative. Une distance pe négative correspond à une pupille d'entrée fictive.

Ainsi les formules de vergence de l'invention remplacent la détermination des grandissements par les équations de Korsch de l'état de la technique qui intègrent un degré de liberté (voir Etat de la technique première étape). Ces formules sont déterminées sur l'axe.

La résolution analytique de la contrainte de position de pupille de sortie constitue un apport original de l'invention, et un avantage par rapport à l'état de l'art qui consiste à résoudre numériquement la contrainte en optimisant un critère discontinu et non convexe (voir état de la technique). La résolution analytique de l'invention a donc un avantage clé : il n'y a pas besoin de chercher numériquement le paramètre R1 (gain de temps en phase d'exploration) et on obtient toutes les solutions.

Le reste des étapes de calcul du design sont classiques:
Les conicités sur l'axe des quatre miroirs consécutifs sont déterminées à partir des équations de Korsch.

Les quatre miroirs sont agencés en trois dimensions de manière à ce que la lumière se propageant dans le télescope ne soit pas obstruée. Les positions et inclinaisons respectives des miroirs en trois dimensions sont déterminées de manière à supprimer l'obstruction de la lumière se propageant dans le télescope, en ajoutant à la combinaison optique formée par les quatre miroirs sur l'axe, au moins une inclinaison d'un miroir, et/ou au moins un off-axis de pupille et/ou de champ, et/ou au moins un miroir de renvoi.

Optionnellement on ajoute à au moins une surface de miroirs une composante dite « free form » pour compenser les aberrations introduites par l'étape précédente.

Les inventeurs ont montré qu'une erreur absolue de l'ordre de 0.00001 sur les vergences, correspondant à une erreur relative de 0.05% environ, donne une solution qui a une focale fausse de plusieurs mm, un plan focal déplacé de plusieurs mm, de même pour la pupille de sortie si elle est finie. Dans le cas d'une pupille à l'infini, une erreur de vergence de 0.05% la ramène à distance finie. Pour une précision de localisation des pupilles inférieure au mm (distances finies) une précision sur les vergences de l'ordre de 0.01% est requise.

Selon une première variante le télescope est télécentrique, c'est à dire qu'il présente une pupille de sortie Ps localisée à l'infini : *ps* = ∞
Dans ce cas pour le calcul des vergences on détermine la valeur de b avec l'équation (4) correspondant à ce cas.

Un exemple de calcul de ce type de télescope est :

### Paramètres d'entrée (en mm) :

F=-1000 ; pe=0 (pupille d'entrée sur le premier miroir) ; *ps* = ∞ ; e1=250 ; e2=150 ; e3=200, et e4= 250.

Le calcul des vergences donne deux solutions de V₂, et à titre d'exmple on donne ici le quadruplet solution V⁺.
*V*₁ = 0.008251193018496944,
*V*₂ = 0.013036408782331043,
*V*₃ = -0.02584327515414121,
*V*₄ = 0.004555673353313222.

En résolvant les équations de Korsch sur les aberrations de Seidel on obtient les constantes de conicité correspondantes :
*k*₁ = -0.931806,
*k*₂ = -0.045725,
*k*₃ = -0.609265,
*k*₄ = 0.009829.

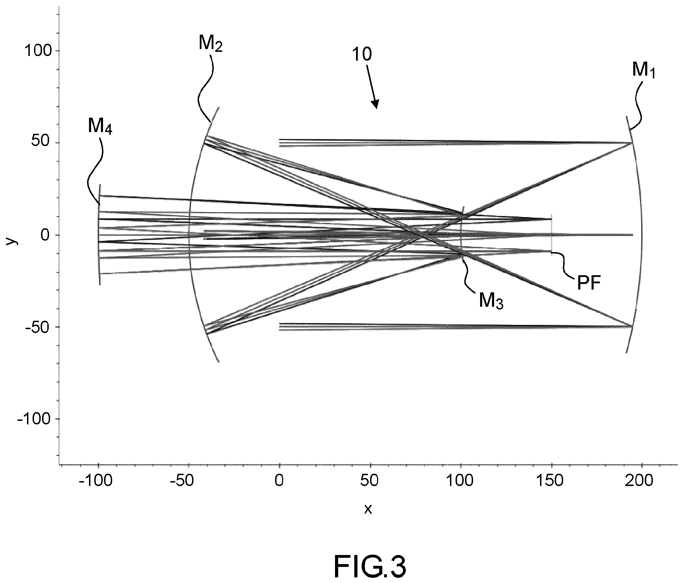

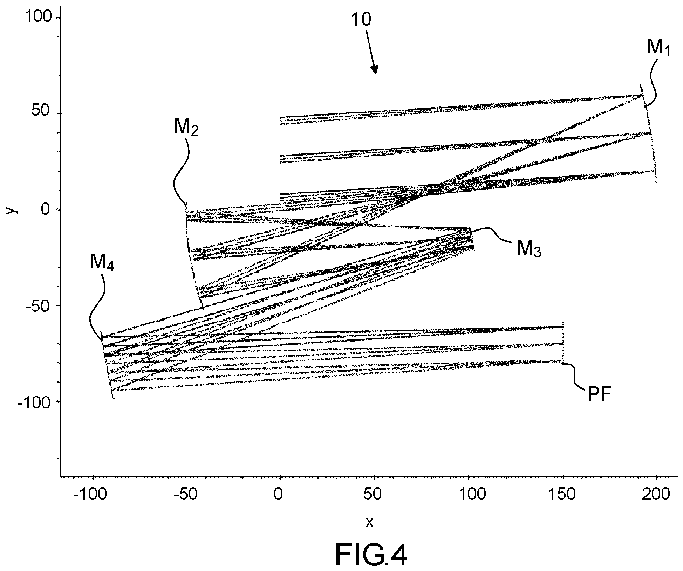

Ces exemple est illustré sur la figure 3 (solution sur l'axe) et figure 4 (solution dé-obscurée). Pour cela on introduit 40 mm d'off axis de pupille, et 4° d'off axis de champs. On observe sur la figure 4 que les faisceaux arrivent bien parallèles sur le détecteur en fin de système, correspondant à la télécentricité. Cette solution dé-obscurée est toujours télécentrique au dixième de degré près, avec un rms spot maximum d'une dizaine de microns (contre 1 micron sur l'axe), et ce avec seulement des surfaces coniques. L'ajout de corrections « freeform », de faible amplitude, permet d'améliorer encore la qualité image.

L'invention concerne également un système spectro-imageur comprenant un télescope télécentrique selon l'invention et comprenant en outre un spectromètre dont la fente d'entrée est disposée dans le plan focal du télescope. La contrainte de télécentricité assure une arrivée parallèle des rayons en fin de télescope, permettant le passage à travers la fente, source du spectromètre.

Selon une deuxième variante le télescope présente une pupille de sortie à distance finie : *ps* < ∞

Dans ce cas pour le calcul des vergences on détermine la valeur de b avec l'équation (4) correspondant à ce cas.

Un exemple de calcul de ce type de télescope est :

### Paramètres d'entrée (en mm) :

F=1000 ; pe=0 (pupille d'entrée sur le premier miroir) ; ps=200 ; e1=150 ; e2= 150 ; e3=150, et e4= 300.

Le calcul des vergences donne deux solutions réelles pour V₂, et à titre d'exemple on donne ici le quadruplet solution V⁺.
*V*₁ = 0.006110594735001887,
*V*₂ = -0.044891769899674555,
*V*₃ = 0.02274762575553041,
*V*₄ = 0.016033549409142256.

En résolvant les équations de Korsch sur les aberrations de Seidel on obtient les constantes de conicité correspondantes :
*k*₁ = -0.927247,
*k*₂ = -2.880721,
*k*₃ = -0.270041,
*k*₄ = -0.129766.

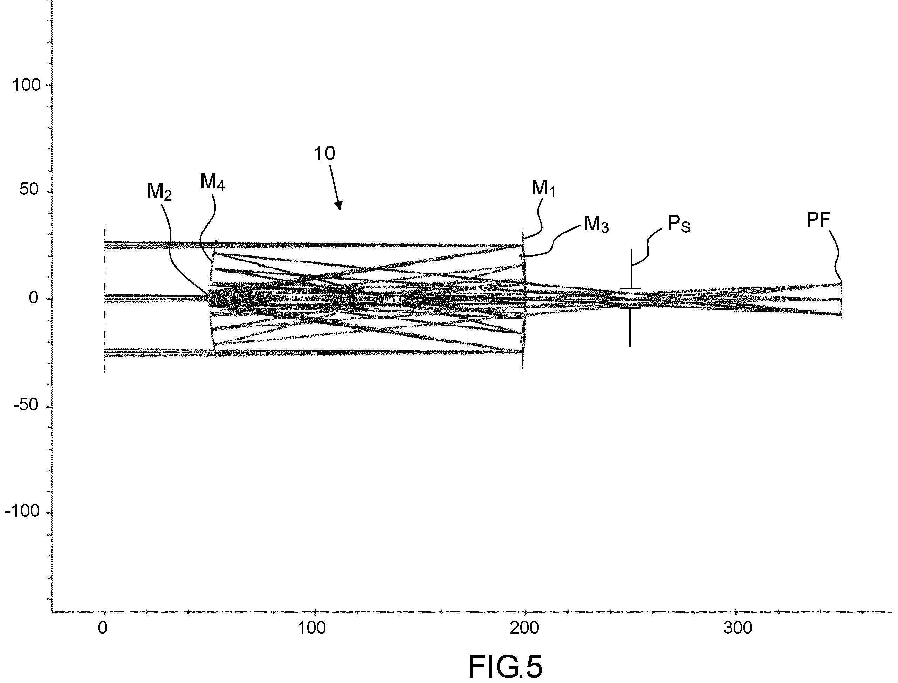

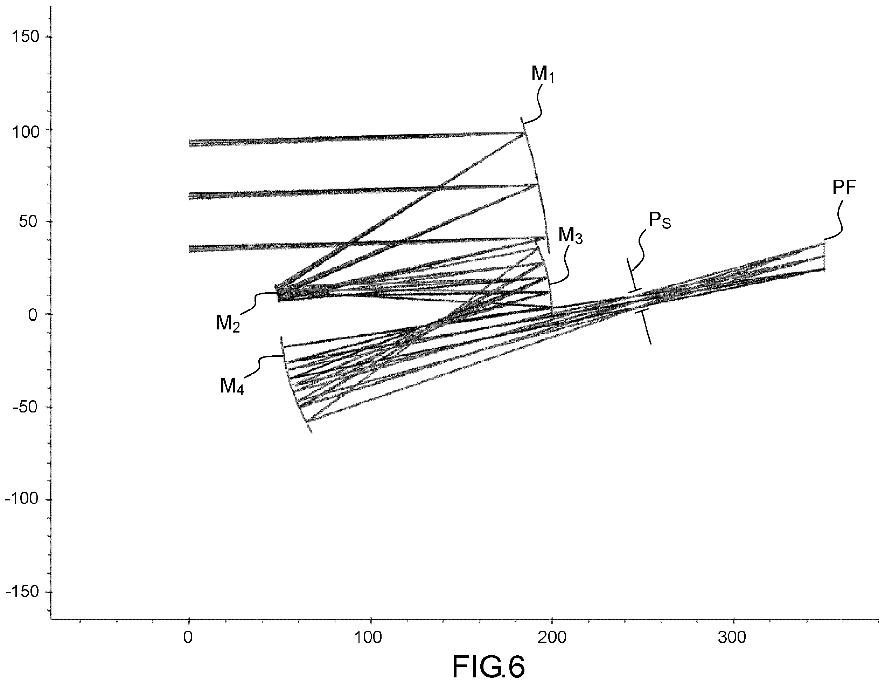

Cet exemple est illustré sur la figure 5 (solution sur l'axe) et figure 6 (solution dé-obscurée). On remarque que la pupille de sortie Ps, est bien située en amont, à 100mm du plan focal PF. Selon un mode de réalisation le système imageur comprend un compartiment fermé présentant un hublot dont la position est confondue avec celle de la pupille de sortie. Le système imageur comprend également un détecteur refroidi positionné dans le compartiment au plan focal (voir schéma de principe de la figure 2). Le détecteur est par exemple un détecteur fonctionnant dans la bande IR.

L'obstruction centrale et le vignettage peuvent être supprimés par un choix judicieux de tilt, off-axis, et miroirs de renvoi, comme illustré figure 6. A noter que cette dernière solution possède un rms spot maximum d'une dizaine de microns (contre 1 micron sur l'axe) et une aberration pupillaire de quelques millimètres, corrigeables par l'ajout de freeform.

La classe de télescopes définie par les formules selon l'invention permet de construire des systèmes optiques pour lesquels on contrôle analytiquement la position de la pupille de sortie via les paramètres d'entrée de calcul.

Les deux principales applications (et leurs variantes « off-axis »), sont les télescopes télécentriques, et les télescopes à plan focal refroidi (ex : télescopes infrarouges).

Ces deux systèmes de base peuvent être utilisés pour créer des systèmes complets, mais aussi comme composant de systèmes hybrides type spectro-imageurs ou systèmes multivoies.

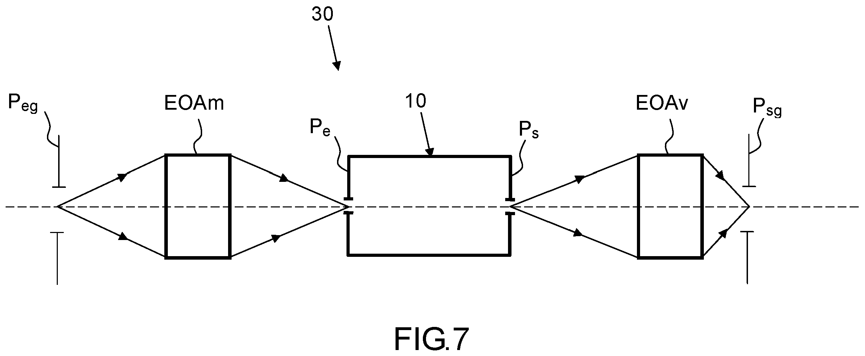

Selon un mode de réalisation l'invention concerne également un système imageur 30 illustré figure 7. Le système optique 30 comprend une pupille d'entrée globale Peg et une pupille de sortie globale Psg et comprend un ensemble optique 4MA selon l'invention décrit précédemment. Il comprend également un ensemble optique amont EOAm disposé en amont de l'ensemble optique 4MA et un ensemble optique aval EOAv disposé en aval de l'ensemble optique 4MA. L'ensemble optique amont est configuré pour imager la pupille d'entrée globale sur la pupille d'entrée de l'ensemble optique 4MA et l'ensemble optique aval est configuré pour imager la pupille de sortie de l'ensemble optique 4MA sur la pupille de sortie globale du système imageur. L'ensemble 4MA est ainsi une brique qui est insérée dans un système optique plus large. Par exemple l'ensemble optique amont est multivoies, c'est à dire qu'il comprend un séparateur spectral et des optiques (lentilles, miroirs) associées à au moins deux bandes spectrales séparées.

Selon un autre aspect l'invention concerne un procédé de détermination des vergences (V₁, V₂, V₃ et V₄) respectivement des quatre miroirs consécutifs (M1, M2, M3, M4) d'un télescope, les vergences étant déterminées par les formules décrites ci-dessus.

Selon un autre aspect l'invention concerne un procédé de conception d'un télescope anastigmate à quatre miroirs consécutifs, comprenant une première étape de détermination des vergences des quatre miroirs telle que décrite ci-dessus. Puis dans une deuxième étape on détermine les conicités des quatre miroirs à partir des équations de Korsch. Dans une troisième étape on détermine les positions et inclinaisons respectives des miroirs en trois dimensions, de manière à supprimer l'obstruction de la lumière se propageant dans le télescope. Pour cela on ajoute à la combinaison optique formée par les quatre miroirs sur l'axe au moins une inclinaison d'un miroir, et/ou au moins un off-axis de pupille et/ou de champ, et/ou au moins un miroir de renvoi.

De manière optionnelle dans une quatrième étape au moins une surface d'un miroir est rendue « free-form » afin de réduire les aberrations introduites par la troisième étape.

## Revendications

1. Télescope anastigmate (10) comprenant quatre miroirs consécutifs, respectivement dénommés premier miroir M₁, deuxième miroir M₂, troisième miroir M₃ et quatrième miroir M₄, formant un ensemble optique dit 4MA, ledit télescope présentant un axe optique (OA), une pupille d'entrée (Pe) disposée à une distance pe du premier miroir et une pupille de sortie (Ps), image de la pupille d'entrée par ledit télescope, et disposée à une distance ps du quatrième miroir, une longueur focale (F) et un plan focal global (PF),
lesdits quatre miroirs consécutifs M₁, M₂, M₃ et M₄ présentant respectivement des vergences V₁, V₂, V₃ et V₄ présentant des valeurs égales à un premier quadruplet ( ${V}_{1}^{+} , {V}_{2}^{+} , {V}_{3}^{+} , {V}_{4}^{+}$) ou à un deuxième quadruplet ( ${V}_{1}^{-} , {V}_{2}^{-} , {V}_{3}^{-} , {V}_{4}^{-}$) déterminées à partir des formules ci-dessous : ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ Avec : $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} . c}{a}}\right) & pour {p}_{s} < ∞ \\ b = - \left(\frac{1}{c}+{ap}_{e}\right) & pour ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = - {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{1}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe : distance entre la pupille d'entrée Pe et M₁
ps : distance entre la pupille de sortie Ps et M₄
F : focale du télescope
ei, i =1..3 : distance entre le miroir Mi et le miroir Mi+1
e4 : distance entre le plan focal du télescope et le miroir M₄
les distances e1 à e4 et ps étant positives.

2. Télescope selon la revendication précédente dans lequel des conicités des quatre miroirs consécutifs sont déterminées à partir des équations de Korsch.

3. Télescope selon l'une des revendications précédentes dans lequel les quatre miroirs sont agencés en trois dimensions de manière à ce que la lumière se propageant dans ledit télescope ne soit pas obstruée.

4. Télescope selon l'une des revendications précédentes configuré de sorte qu'il soit télécentrique, c'est à dire qu'il présente une pupille de sortie à l'infini.

5. Système spectro-imageur comprenant un télescope selon la revendication précédente et comprenant en outre un spectromètre comprenant une fente d'entrée disposée dans le plan focal dudit télescope.

6. Télescope selon l'une des revendications 1 à 3 présentant une pupille de sortie à une distance finie.

7. Télescope selon la revendication précédente comprenant un compartiment fermé présentant un hublot dont la position est confondue avec celle de la pupille de sortie, et comprenant en outre un détecteur refroidi positionné dans le compartiment.

8. Système imageur (30) comprenant une pupille d'entrée globale (Peg) et une pupille de sortie globale (Psg) et comprenant :
- un télescope anastigmate selon l'une des revendications 1 à 3,
- un ensemble optique amont (EOAm) disposé en amont de l'ensemble optique 4MA,
- un ensemble optique aval (EOAv) disposé en aval de l'ensemble optique 4MA,
- l'ensemble optique amont étant configuré pour imager la pupille d'entrée globale sur la pupille d'entrée de l'ensemble optique 4MA et l'ensemble optique aval étant configuré pour imager la pupille de sortie de l'ensemble optique 4MA sur la pupille de sortie globale du système imageur.

9. Procédé de détermination d'un télescope anastigmate dans le but de produire un tel télescope, ce télescope ayant 4 miroirs, ces miroirs ayant des vergences V₁, V₂, V₃ et V₄ respectivement de quatre miroirs consécutifs dénommés premier miroir M1, deuxième miroir M2, troisième miroir M3 et quatrième miroir M4 d'un télescope anastigmate et formant un ensemble optique dit 4MA, ledit télescope présentant un axe optique (OA), une pupille d'entrée (Pe) disposée à une distance pe du premier miroir et une pupille de sortie (Ps), image de la pupille d'entrée par ledit télescope, et disposée à une distance ps du quatrième miroir, une longueur focale (f) et un plan focal global (PF),
lesdites vergences étant déterminées sur l'axe optique et égales à un premier quadruplet ( ${V}_{1}^{+} , {V}_{2}^{+} , {V}_{3}^{+} , {V}_{4}^{+}$) ou à un deuxième quadruplet ( ${V}_{1}^{-} , {V}_{2}^{-} , {V}_{3}^{-} , {V}_{4}^{-}$) déterminés selon les formules : ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ Avec : $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} . c}{a}}\right) & pour {p}_{s} < ∞ \\ b = - \left(\frac{1}{c}+{ap}_{e}\right) & pour ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ $\begin{matrix}{β}_{1} = {e}_{1} {e}_{2} {e}_{3} , \\ {p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,\end{matrix}$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe : distance entre la pupille d'entrée Pe et M₁
ps : distance entre la pupille de sortie Ps et M₄
F : focale du télescope
ei, i =1..3 : distance entre le miroir Mi et le miroir Mi+1
e4 : distance entre le plan focal du télescope et le miroir M₄
les distances e1 à e4 et ps étant positives.

10. Procédé de conception d'un télescope anastigmate - dans le but de produire ce télescope - comprenant :
- une étape de détermination desdites vergences selon la revendication précédente,
- une étape de détermination des conicités desdits quatre miroirs à partir des équations de Korsch,
- une étape de détermination des positions et inclinaisons respectives desdits miroirs en trois dimensions de manière à supprimer une obstruction de la lumière se propageant dans ledit télescope, en ajoutant à la combinaison optique formée par lesdits quatre miroirs sur l'axe, au moins une inclinaison d'un miroir, et/ou au moins un off-axis de pupille et/ou de champ, et/ou au moins un miroir de renvoi.

## Patentansprüche

1. Anastigmatisches Teleskop (10), umfassend vier aufeinanderfolgenden Spiegeln, die jeweils als erster Spiegel M₁, zweiter Spiegel M₂, dritter Spiegel M₃ und vierter Spiegel M₄ bezeichnet werden und eine sogenannte 4MA-optische Anordnung bilden, wobei das Teleskop eine optische Achse (OA), eine in einem Abstand pe vom ersten Spiegel angeordnete Eintrittspupille (Pe) und eine Austrittspupille (Ps) aufweist, die das Abbild der Eintrittspupille durch das Teleskop darstellt und in einem Abstand ps vom vierten Spiegel angeordnet ist, eine Brennweite (F) und eine globale Brennebene (PF),
die vier aufeinanderfolgenden Spiegel M₁, M₂, M₃ und M₄ jeweils Brechkräfte V₁, V₂, V₃ und V₄ aufweisen, die Werte gleich einem ersten Quadrupel ( ${V}_{1}^{+} , {V}_{2}^{+} , {V}_{3}^{+} , {V}_{4}^{+}$) oder einem zweiten Quadrupel ( ${V}_{1}^{-} , {V}_{2}^{-} , {V}_{3}^{-} , {V}_{4}^{-}$) aufweisen, die aus den untenstehenden Formeln bestimmt werden: ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ Mit: $a = \frac{{e}_{4}}{F}$ $c = \frac{- 1}{F}$ $\begin{matrix}b = - \left(\frac{{ap}_{e} + \frac{{p}_{s}}{a} + {cp}_{e} {p}_{s}}{1 + \frac{{p}_{s} ⋅ c}{a}}\right) & für {p}_{s} < ∞ \\ b = - \left(\frac{1}{c}+{ap}_{e}\right) & für ps = ∞\end{matrix}$ ${α}_{0} = b - \left({e}_{1}+{e}_{2}+{e}_{3}\right)$ ${α}_{1} = {e}_{1} \left({e}_{2}+{e}_{3}\right)$ ${β}_{0} = - {e}_{3} \left({e}_{1}+{e}_{2}\right)$ ${β}_{1} = {e}_{1} {e}_{2} {e}_{3}$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe : Abstand zwischen der Eintrittspupille Pe und M₁
ps : Abstand zwischen der Austrittspupille Ps und M₄
F : Brennweite des Teleskops
ei, i = 1..3 : Abstand zwischen dem Spiegel Mi und dem Spiegel Mi + 1
e4 : Abstand zwischen der Brennebene des Teleskops und dem Spiegel M₄
wobei die Abstände e1 bis e4 und ps positiv sind.

2. Teleskop nach dem vorstehenden Anspruch, wobei Konizitäten der vier aufeinanderfolgenden Spiegel anhand der Korsch-Gleichungen bestimmt werden.

3. Teleskop nach einem der vorstehenden Ansprüche, wobei die vier Spiegel dreidimensional so angeordnet sind, dass das sich in dem Teleskop ausbreitende Licht nicht behindert wird.

4. Teleskop nach einem der vorstehenden Ansprüche, das so konfiguriert ist, dass es telezentrisch ist, das heißt, dass es eine Austrittspupille im Unendlichen aufweist.

5. Spektralbildgebungssystem, das ein Teleskop nach dem vorstehenden Anspruch umfasst und weiter ein Spektrometer umfasst, das einen in der Brennebene des Teleskops angeordneten Eingangsspalt aufweist.

6. Teleskop nach einem der Ansprüche 1 bis 3, das eine Austrittspupille in endlichem Abstand aufweist.

7. Teleskop nach dem vorstehenden Anspruch, das ein geschlossenes Gehäuse mit einem Sichtfenster umfasst, dessen Position mit der der Austrittspupille zusammenfällt, und das weiter einen gekühlten Detektor umfasst, der in dem Gehäuse angeordnet ist.

8. Abbildungssystem (30), das eine globale Eintrittspupille (Peg) und eine globale Austrittspupille (Psg) umfasst, und umfassend:
- ein anastigmatisches Teleskop nach einem der Ansprüche 1 bis 3,
- eine vorgelagerte optische Baugruppe (EOAm), die vor der optischen Baugruppe 4MA angeordnet ist,
- eine nachgeschaltete optische Baugruppe (EOAv), die hinter der optischen Baugruppe 4MA angeordnet ist,
- wobei die vorgelagerte optische Anordnung so konfiguriert ist, dass sie die globale Eintrittspupille auf die Eintrittspupille der optischen Anordnung 4MA abbildet, und die nachgelagerte optische Anordnung so konfiguriert ist, dass sie die Austrittspupille der optischen Anordnung 4MA auf die globale Austrittspupille des Abbildungssystems abbildet.

9. Verfahren zur Bestimmung eines anastigmatischen Teleskops mit dem Ziel, dieses Teleskop herzustellen, wobei dieses Teleskop vier Spiegel aufweist, wobei diese Spiegel Brechkräfte V₁, V₂, V₃ und V₄ der vier aufeinanderfolgenden Spiegel, die als erster Spiegel M1, zweiter Spiegel M2, dritter Spiegel M3 und vierter Spiegel M4 eines anastigmatischen Teleskops bezeichnet werden und eine sogenannte 4MA-optische Anordnung bilden, wobei das Teleskop eine optische Achse (OA), eine in einem Abstand **pe** vom ersten Spiegel angeordnete Eintrittspupille (Pe) und eine Austrittspupille (Ps) aufweist, die das Abbild der Eintrittspupille durch das Teleskop darstellt und in einem Abstand **ps** vom vierten Spiegel angeordnet ist, eine Brennweite (f) und eine globale Brennebene (PF),
wobei die Brechkräfte auf der optischen Achse bestimmt werden und einem ersten Quadruplet ( ${V}_{1}^{+} , {V}_{2}^{+} , {V}_{3}^{+} , {V}_{4}^{+}$) oder einem zweiten Quadruplet ( ${V}_{1}^{-} , {V}_{2}^{-} , {V}_{3}^{-} , {V}_{4}^{-}$) entsprechen, die nach den folgenden Formeln bestimmt werden: ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ Mit: $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} ⋅ c}{a}}\right) für {p}_{s} < ∞ \\ b = - \left(\frac{1}{c}+{ap}_{e}\right) für ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $\begin{matrix}β = \left({p}_{1}+{q}_{2}\right) {V}_{2}^{0} + \left({r}_{2}+{q}_{1}+{p}_{0}\right) , \\ δ = - \frac{{r}_{0}}{{V}_{2}^{0}} .\end{matrix}$
pe : Abstand zwischen der Eintrittspupille Pe und M₁
ps : Abstand zwischen der Austrittspupille Ps und M₄
F : Brennweite des Teleskops
ei, i = 1..3 : Abstand zwischen dem Spiegel Mi und dem Spiegel Mi + 1
e4 : Abstand zwischen der Brennebene des Teleskops und dem Spiegel M₄
wobei die Abstände e1 bis e4 und ps positiv sind.

10. Verfahren zur Konstruktion eines anastigmatischen Teleskops - mit dem Ziel, dieses Teleskop herzustellen -, umfassend:
- ein Schritt zur Bestimmung der Brechkraftwerte nach dem vorstehenden Anspruch,
- ein Schritt zur Bestimmung der Konizitäten der vier Spiegel anhand der Korsch-Gleichungen,
- einen Schritt zur Bestimmung jeweiligen Positionen und Neigungen der Spiegel in drei Dimensionen, um eine Behinderung des sich in dem Teleskop ausbreitenden Lichts zu beseitigen, indem der durch die vier Spiegel auf der Achse gebildeten optischen Kombination mindestens eine Spiegelneigung und/oder mindestens eine Pupillen- und/oder Feldverschiebung und/oder mindestens einen Umlenkspiegel hinzugefügt wird.

## Claims

1. An anastigmatic telescope (10) comprising four consecutive mirrors, respectively referred to as the first mirror M₁, second mirror M₂, third mirror M₃, and fourth mirror M₄, forming an optical system known as 4MA, said telescope having an optical axis (OA), an entrance pupil (Pe) located at a distance pe from the first mirror, and an exit pupil (Ps), which is the image of the entrance pupil formed by said telescope, and located at a distance ps from the fourth mirror, a focal length (F), and a global focal plane (PF),
said four consecutive mirrors M₁, M₂, M₃ and M₄ having, respectively, vergences V₁, V₂, V₃ and V₄ having values equal to a first quadruplet ( ${V}_{1}^{+} , {V}_{2}^{+} , {V}_{3}^{+} , {V}_{4}^{+}$) or a second quadruplet ( ${V}_{1}^{-} , {V}_{2}^{-} , {V}_{3}^{-} , {V}_{4}^{-}$*)* determined from the following formulas: ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ With: $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} ⋅ c}{a}}\right) for {p}_{s} < ∞ \\ b = - \left(\frac{1}{c}+{ap}_{e}\right) for ps = ∞\end{matrix}\right.$ ${α}_{0} = b - \left({e}_{1}+{e}_{2}+{e}_{3}\right)$ ${α}_{1} = {e}_{1} \left({e}_{2}+{e}_{3}\right)$ ${β}_{0} = - {e}_{3} \left({e}_{1}+{e}_{2}\right)$ ${β}_{1} = {e}_{1} {e}_{2} {e}_{3}$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe: distance between the entrance pupil Pe and M₁
ps: distance between the exit pupil Ps and M₄
F: focal length of the telescope
ei, i = 1..3: distance between mirror Mi and mirror Mi + 1
e4: distance between the focal plane of the telescope and mirror M₄
where distances e1 through e4 and ps are positive.

2. The telescope according to the preceding claim, in which the conicities of the four consecutive mirrors are determined from Korsch's equations.

3. The telescope according to one of the preceding claims, in which the four mirrors are arranged in three dimensions such that light propagating through said telescope is not obstructed.

4. The telescope according to one of the preceding claims, configured to be telecentric, i.e., having an exit pupil at infinity.

5. A spectro-imaging system comprising a telescope according to the preceding claim and further comprising a spectrometer having an entrance slit disposed in the focal plane of said telescope.

6. The telescope according to any one of claims 1 through 3 having an exit pupil at a finite distance.

7. The telescope according to the preceding claim comprising a closed compartment having a viewing port whose position coincides with that of the exit pupil, and further comprising a cooled detector positioned within the compartment.

8. An imaging system (30) comprising a global entrance pupil (Peg) and a global exit pupil (Psg) and comprising:
- an anastigmatic telescope according to any one of claims 1 to 3,
- an upstream optical assembly (EOAm) disposed upstream of the 4MA optical assembly,
- a downstream optical assembly (EOAv) disposed downstream of the 4MA optical assembly,
- the upstream optical assembly being configured to image the global entrance pupil onto the entrance pupil of the 4MA optical assembly, and the downstream optical assembly being configured to image the exit pupil of the 4MA optical assembly onto the global exit pupil of the imaging system.

9. A method for determining an anastigmatic telescope for the purpose of producing such a telescope, said telescope having 4 mirrors, said mirrors having vergences V₁, V₂, V₃ and V₄ respectively of four consecutive mirrors designated as the first mirror M₁, the second mirror M2, third mirror M3, and fourth mirror M4 of an anastigmatic telescope and forming an optical assembly known as 4MA, said telescope having an optical axis (OA), an entrance pupil (Pe) located at a distance **pe** from the first mirror, and an exit pupil (Ps), which is the image of the entrance pupil formed by said telescope and located at a distance **ps** from the fourth mirror, a focal length (f), and a global focal plane (PF),
said vergences being determined along the optical axis and equal to a first quadruplet ( ${V}_{1}^{+} , {V}_{2}^{+} , {V}_{3}^{+} , {V}_{4}^{+}$) or a second quadruplet ( ${V}_{1}^{-} , {V}_{2}^{-} , {V}_{3}^{-} , {V}_{4}^{-}$) determined according to the formulas: ${V}_{2}^{\pm } = \frac{- β \pm \sqrt{{β}^{2} - 4 αδ}}{2 α}$ ${V}_{3}^{\pm } = \frac{{α}_{0} + {α}_{1} {V}_{2}^{\pm }}{{β}_{0} + {β}_{1} {V}_{2}^{\pm }}$ ${V}_{1}^{\pm } = \frac{a - 1 + {e}_{2} {V}_{2}^{\pm } + {e}_{3} \left({V}_{2}^{\pm }+{V}_{3}^{\pm }\right) - {e}_{2} {e}_{3} {V}_{2}^{\pm } {V}_{3}^{\pm }}{{e}_{1} {e}_{2} {V}_{2}^{\pm } - \left({e}_{1}+{e}_{2}+{e}_{3}\right) + {e}_{1} {e}_{3} \left({V}_{2}^{\pm }+{V}_{3}^{\pm }\right) + {e}_{2} {e}_{3} {V}_{3}^{\pm } - {e}_{1} {e}_{2} {e}_{3} {V}_{2}^{\pm } {V}_{3}^{\pm }}$ ${V}_{4}^{\pm } = - \left({V}_{1}^{\pm }+{V}_{2}^{\pm }+{V}_{3}^{\pm }\right)$ With: $a = \frac{{e}_{4}}{F}$ $c = \frac{- 1}{F}$ $\left\{\begin{matrix}b = - \left(\frac{{ap}_{e} + \frac{{p}_{s}}{a} + {cp}_{e} {p}_{s}}{1 + \frac{{p}_{s} ⋅ c}{a}}\right) for {p}_{s} < ∞ \\ b = - \left(\frac{1}{c}+{ap}_{e}\right) for ps = ∞\end{matrix}\right.$ ${α}_{0} = b - \left({e}_{1}+{e}_{2}+{e}_{3}\right) ,$ ${α}_{1} = {e}_{1} \left({e}_{2}+{e}_{3}\right) ,$ ${β}_{0} = - {e}_{3} \left({e}_{1}+{e}_{2}\right) ,$ ${β}_{1} = {e}_{1} {e}_{2} {e}_{3} ,$ ${p}_{0} = - {α}_{1}^{2} {ae}_{3} \left({e}_{1}+{e}_{2}\right) + {α}_{1} {β}_{1} {ce}_{3} \left({e}_{1}+{e}_{2}\right) - {β}_{1}^{2} {\left(a-1\right)}^{2} - {β}_{1}^{2} c \left({e}_{1}+{e}_{2}+{e}_{3}\right) ,$ ${p}_{1} = {α}_{1}^{2} {ae}_{1} {e}_{2} {e}_{3} + {α}_{1} {β}_{1} \left(-2{ae}_{1}{e}_{3}-{e}_{1}{e}_{2}{e}_{3}c\right) + {β}_{1}^{2} {ce}_{1} \left({e}_{2}+{e}_{3}\right) ,$ ${q}_{1} = 2 {α}_{0} {α}_{1} {ae}_{1} {e}_{2} {e}_{3} - \left({α}_{0}{β}_{1}+{α}_{1}{β}_{0}\right) \left(2{ae}_{1}{e}_{3}+{e}_{1}{e}_{2}{e}_{3}c\right) + 2 {β}_{0} {β}_{1} {ce}_{1} \left({e}_{2}+{e}_{3}\right) ,$ ${q}_{2} = \left({α}_{0}{β}_{1}+{α}_{1}{β}_{0}\right) {ae}_{1} {e}_{2} {e}_{3} - 2 {β}_{0} {β}_{1} {ae}_{1} \left({e}_{2}+{e}_{3}\right) ,$ ${r}_{0} = - {α}_{0}^{2} {e}_{3} a \left({e}_{1}+{e}_{2}\right) + {α}_{0} {β}_{0} {ce}_{3} \left({e}_{1}+{e}_{2}\right) - {β}_{0}^{2} \left({\left(a-1\right)}^{2}+c\left({e}_{1}+{e}_{2}+{e}_{3}\right)\right) ,$ ${r}_{2} = {α}_{0} {β}_{0} {ae}_{1} {e}_{2} {e}_{3} - {β}_{0}^{2} {e}_{1} \left({e}_{2}+{e}_{3}\right) a ,$ ${V}_{2}^{0} = - \frac{{β}_{0}}{{β}_{1}} ,$ $α = {p}_{1} + {q}_{2} ,$ $β = \left({p}_{1}+{q}_{2}\right) {V}_{2}^{0} + \left({r}_{2}+{q}_{1}+{p}_{0}\right) ,$ $δ = - \frac{{r}_{0}}{{V}_{2}^{0}} .$
pe: distance between the entrance pupil Pe and M₁
ps: distance between the exit pupil Ps and M₄
F: focal length of the telescope
ei, i = 1..3: distance between mirror Mi and mirror Mi + 1
e4: distance between the focal plane of the telescope and mirror M₄
where distances e1 through e4 and ps are positive.

10. A method for designing an anastigmatic telescope, for the purpose of producing said telescope, comprising:
- a step of determining said vergences according to the preceding claim,
- a step of determining the conicities of said four mirrors based on Korsch's equations,
- a step of determining the respective positions and inclinations of said mirrors in three dimensions so as to eliminate obstruction of light propagating through said telescope, by adding to the optical combination formed by said four mirrors on the axis, at least one mirror tilt, and/or at least one off-axis pupil and/or field, and/or at least one secondary mirror.
